# EUROPÄISCHE PATENTSCHRIFT

(11) **EP 4 388 206 B1**
(45) Veröffentlichungstag und Bekanntmachung des Hinweises auf die Patenterteilung: **03.09.2025**
(21) Anmeldenummer: 22737890.8
(22) Anmeldetag: 29.06.2022
(51) Int. Cl.: F16B 5/02

(54) **TOLERANZAUSGLEICHSELEMENT MIT EINEM DOPPELGEWINDEBOLZEN, EINE SCHRAUBVERBINDUNG ZWISCHEN ZWEI BAUTEILEN MITHILFE DES TOLERANZAUSGLEICHSELEMENTS SOWIE EIN HERSTELLUNGSVERFAHREN FÜR DAS TOLERANZAUSGLEICHSELEMENT**
TOLERANCE COMPENSATING ELEMENT HAVING A DOUBLE THREADED BOLT, SCREW CONNECTION BETWEEN TWO COMPONENTS BY MEANS OF THE TOLERANCE COMPENSATING ELEMENT, AND METHOD FOR PRODUCING THE TOLERANCE COMPENSATING ELEMENT
ÉLÉMENT DE COMPENSATION DE TOLÉRANCE AYANT UN BOULON À DOUBLE FILETAGE, LIAISON PAR VIS ENTRE DEUX COMPOSANTS AU MOYEN DE L'ÉLÉMENT DE COMPENSATION DE TOLÉRANCE, ET PROCÉDÉ DE PRODUCTION DE L'ÉLÉMENT DE COMPENSATION DE TOLÉRANCE

(30) Priorität: 17.08.2021 DE 102021121385
(43) Veröffentlichungstag der Anmeldung: 26.06.2024
(73) Patentinhaber: Böllhoff Verbindungstechnik GmbH, 33649 Bielefeld (DE)
(72) Erfinder: STEFFENFAUSEWEH, Sandra, 33415 Verl (DE); VORDERWISCH, Alexander, 33613 Bielefeld (DE)
(74) Vertreter: HWP Intellectual Property
(86) Internationale Anmeldenummer: PCT/EP2022/067963
(87) Internationale Veröffentlichungsnummer: WO 2023/020739

(56) Entgegenhaltungen:
- DE-A1- 102019 135 096
- DE-U1- 20 204 994
- US-A1- 2021 018 026
- US-B2- 10 309 435

## Beschreibung

### 1. Gebiet der Erfindung

Die vorliegende Erfindung betrifft ein selbsttätiges Toleranzausgleichselement, mit dem Toleranzen im Abstand zwischen einem ersten und einem zweiten Bauteil selbsttätig ausgleichbar sind, wobei der Kern des Toleranzausgleichselements aus einem Doppelgewindebolzen mit einem dazwischenliegenden Stützbund besteht. Des Weiteren betrifft vorliegende Erfindung eine Schraubverbindung zwischen einem ersten und einem zweiten Bauteil mit dem oben genannten Toleranzausgleichselement. Des Weiteren umfasst vorliegende Erfindung ein Herstellungsverfahren für das Toleranzausgleichselement.

### 2. Hintergrund der Erfindung

Im Stand der Technik sind verschiedenste Konstruktionen von Toleranzausgleichselementen bekannt. Diese lassen sich in die Gruppe der selbsttätigen Toleranzausgleichselemente und die Gruppe der nicht selbsttätigen Toleranzausgleichselemente unterteilen. Ein selbsttätiges Toleranzausgleichselement ist in der Lage, beim Einschrauben der Befestigungsschraube in das Toleranzausgleichselement selbsttätig einen vorhandenen Abstand zwischen den aneinander zu befestigenden zwei Bauteilen auszugleichen. Ein nicht selbsttätiges Toleranzausgleichselement wird zwar ebenfalls mithilfe einer Befestigungsschraube an den zwei Bauteilen befestigt, es ist jedoch erforderlich, den durch das Toleranzausgleichselement auszugleichenden Abstand zwischen den zwei Bauteilen separat einzustellen.

Bei der Konstruktion unterschiedlicher Toleranzausgleichselemente werden häufig Doppelgewindebolzen verwendet. Unter einem Doppelgewindebolzen versteht man einen Bolzen, der zwei axiale Gewindeabschnitte unterschiedlicher Gangrichtung getrennt durch einen dazwischen angeordneten Stützbund aufweist. Zwar offenbart DE 10 2017 206 651 A1 einen derartigen Doppelgewindebolzen, nur wird dieser zum Ausgleich von lateralen Toleranzen innerhalb einer den Außendurchmesser des Doppelgewindebolzens übersteigenden Durchgangsöffnung genutzt.

DE 10 2016 209 395 A1 beschreibt einen Befestigungsbolzen mit einem Stützbund, von dem sich nur einseitig ein axialer Gewindeabschnitt erstreckt. Der gegenüberliegende axiale Abschnitt ist zylindrisch ausgebildet, sodass eine Klemmmuffe mit Gewinde darauf verschiebbar angeordnet und befestigt werden kann. Somit wird das zweite Gewinde des Gewindebolzens durch die Klemmmuffe bereitgestellt. Diese Konstruktion erfordert jedoch, dass der Abstand zwischen den beiden Bauteilen vom Werker einzeln eingestellt wird, da die verschiebbare Klemmmuffe nicht über einen selbsttätigen Toleranzausgleich versetzt wird.

US 2019/0128311 A1, US 10,309,435 B2 sowie DE 10 2015 007 042 A1 beschreiben jeweils Doppelgewindebolzen mit einem Stützbund. Während der eine axiale Gewindeabschnitt in ein erstes Bauteil eingedreht wird, wird mit dem Aufschrauben eines weiblichen Gewindeelements auf den zweiten axialen Gewindeabschnitt die Befestigung am ersten Bauteil erzielt. Das Innengewinde des weiblichen Gewindeelements zeichnet sich dadurch aus, dass ein Reibwert zwischen dem Innengewinde des weiblichen Gewindeelements und dem zweiten Gewindeabschnitt größer ist als ein Reibwert zwischen dem ersten Gewindeabschnitt und einem Aufnahmegewinde des ersten Bauteils. Dies führt dazu, dass eine Drehung des weiblichen Gewindeelements den ersten Gewindeabschnitt des Doppelgewindebolzens im ersten Bauteil axial versetzt, bis der Stützbund am zweiten Bauteil anliegt. Das Anliegen des Stützbunds am zweiten Bauteil bildet die Grundlage für das Überwinden des Reibmoments zwischen dem Innengewinde des weiblichen Gewindeelements und dem zweiten Gewindeabschnitt. Ein gesteigertes Reibmoment oder Widerstandsmoment zwischen dem Innengewinde des weiblichen Gewindeelements und dem Gewinde des zweiten Gewindeabschnitts wird beispielsweise durch einen gezielten Gewindefehler und/oder eine Gewindewelligkeit oder andere konstruktive Hemmungen zwischen den ineinandergreifenden Gewinden des axialen Gewindeabschnitts und des weiblichen Gewindeelements erzeugt.

DE 10 2017 131 235 A1 sowie DE 202 04 994 U1 nutzen ebenfalls einen Doppelgewindebolzen mit Stützbund. Während in DE 202 04 994 U1 der erste Gewindeabschnitt in das Innengewinde einer Blindnietmutter eingeschraubt wird, erfolgt die Befestigung am zweiten Gewindeabschnitt mit einer Feststellmutter oder einer Mutter mit einem Klemmeinsatz. Derartige Klemmeinsätze oder Reibelemente innerhalb eines weiblichen Gewindes eines Gewindeelements haben jedoch eine relativ große Bandbreite eines Hemmmoments, sodass sie nur mit großer Ungenauigkeit an ein Verbindungsverfahren mit Toleranzausgleich angepasst werden können.

Es ist daher die Aufgabe vorliegender Erfindung, ein zum Stand der Technik alternatives Toleranzausgleichselement mit selbsttätigem Toleranzausgleich zwischen zwei aneinander zu befestigenden Bauteilen bereitzustellen, welches basierend auf einer wirtschaftlichen Konstruktion eine verlässliche Verschraubung von zwei zueinander beabstandeten Bauteilen gewährleistet.

### 3. Zusammenfassung der Erfindung

Die obige Aufgabe wird durch ein selbsttätiges Toleranzausgleichselement, mit dem Toleranzen im Abstand zwischen einem ersten und einem zweiten Bauteil ausgleichbar sind, gemäß dem unabhängigen Patentanspruch 1 gelöst. Des Weiteren löst obige Aufgabe eine Schraubverbindung zwischen einem ersten und einem zweiten Bauteil mithilfe des oben genannten Toleranzausgleichselements gemäß dem Patentanspruch 7 sowie ein Herstellungsverfahren für das Toleranzausgleichselement gemäß dem unabhängigen Patentanspruch 9. Vorteilhafte Ausgestaltungen und Weiterentwicklungen vorliegender Erfindung gehen aus der folgenden Beschreibung, den begleitenden Zeichnungen sowie den anhängenden Patentansprüchen hervor.

Das erfindungsgemäße selbsttätige Toleranzausgleichselement, mit dem Toleranzen im Abstand zwischen einem ersten und einem zweiten Bauteil ausgleichbar sind, weist die folgenden Merkmale auf: einen Doppelgewindebolzen mit einem ersten und einem zweiten axialen Gewindeabschnitt entgegengesetzter Gangrichtung, die durch einen zwischen ihnen angeordneten Stützbund voneinander getrennt sind, vorzugsweise mindestens ein Antriebsmerkmal zum Drehen des Gewindebolzens ist benachbart zu einem ersten und/oder einem zweiten axialen Ende des Gewindebolzens angeordnet, und angrenzend an den ersten Gewindeabschnitt ist in bundabgewandten Richtung ein verjüngter Halteabschnitt mit einem darauf angeordneten Mitschlepper vorgesehen, der angepasst ist, um durch ein Innengewinde eines weiblichen Gewindeelements passend zum ersten Gewindeabschnitt reibschlüssig und/oder formschlüssig das Toleranzausgleichselement mit Mitschlepper bzw. über den Mitschlepper mitzudrehen, sodass ein Abstand zwischen dem ersten und dem zweiten Bauteil selbsttätig durch das Toleranzausgleichselement überbrückbar ist.

Kernstück des erfindungsgemäß bevorzugten Toleranzausgleichselements bildet der Doppelgewindebolzen. Der Doppelgewindebolzen ist vorzugsweise einteilig oder integral ausgebildet, um eine geforderte Stabilität des Toleranzausgleichselement zu gewährleisten. Von einem Stützbund des Doppelgewindebolzens erstrecken sich in entgegengesetzter Richtung zwei Gewindeabschnitte mit jeweils einem Gewinde, die im Vergleich zueinander eine entgegengesetzte Gangrichtung aufweisen. Der erste Gewindeabschnitt weist Haltabschnitt auf, auf welchem ein Mitschlepper angeordnet ist. Vorzugsweise ist der Halteabschnitt verjüngt im Vergleich zum ersten Gewindeabschnitt ausgebildet. Dadurch ist ein Anordnen des Mitschleppers auf dem Halteabschnitt erleichtert. Ebenfalls bevorzugt ist der Mitschlepper unabhängig von seiner Ausgestaltung und Materialwahl reibschlüssig, stoffschlüssig oder formschlüssig auf dem Halteabschnitt gehalten.

Dieser Mitschlepper stellt ein ausreichend großes Reibmoment zwischen Mitschlepper und Doppelgewindebolzen sowie zwischen Mitschlepper und weiblichem Gewindeelement zur Verfügung, sobald ein weibliches Gewindeelement über diesen Mitschlepper auf den ersten Gewindeabschnitt geschraubt werden soll. Dies führt wiederum zu einem gewünschten Mitdrehen des Doppelgewindebolzens über den Mitschlepper mit dem weiblichen Gewindeelement, sodass die Drehbewegung in Kombination mit dem zweiten Gewindeabschnitt ein Verstellen des Stützbunds in Richtung eines zu einem ersten Bauteil beabstandeten zweiten Bauteils bewirkt, um den zwischen den Bauteilen befindlichen Abstand auszugleichen bzw. zu überbrücken.

Es ist ebenfalls bevorzugt, den Mitschlepper formschlüssig und/oder stoffschlüssig auf dem Halteabschnitt zu befestigen, um die Rotation des weiblichen Gewindeelements auf den Doppelgewindebolzen zu übertragen. Gemäß einer weiteren bevorzugten Ausgestaltung vorliegender Erfindung stellt das weibliche Gewindeelement mit der radialen Außenseite des Mittschleppers eine formschlüssige und/oder eine reibschlüssige Verbindung her, um eine Drehung zu übertragen.

Vorzugsweise ist der Mitschlepper als separates Teil im Vergleich zum Doppelgewindebolzen vorgesehen, sodass dieser auf den bevorzugt verjüngten Halteabschnitt des ersten Gewindeabschnitts aufgesteckt werden kann.

Gemäß einer bevorzugten Ausgestaltung des Doppelgewindebolzens ist mindestens ein Antriebsmerkmal zum Drehen des Gewindebolzens benachbart zu einem ersten und/oder einem zweiten axialen Ende des Gewindebolzens angeordnet. Das Antriebsmerkmal erleichtert die Verbindung zwischen dem Doppelgewindebolzen und einem Werkzeug, um die Drehung des Werkzeugs auf den Doppelgewindebolzen zu übertragen.

Es ist ebenfalls bevorzugt, auf das Antriebsmerkmal zu verzichten. In diesem Fall wird der Doppelgewindebolzen vorzugsweise durch den Werker manuell gehalten und eingedreht, ohne dass dieser Vorgang ein Werkzeug oder konstruktive Vorkehrungen zur Übertragung einer Drehbewegung erfordert.

Gemäß einer bevorzugten Ausgestaltung vorliegender Erfindung ist der Mitschlepper eine Gewindehülse mit einem Außengewinde, die aus Metall oder Kunststoff besteht.

Im Rahmen der bevorzugten Herstellung des selbsttätigen Toleranzausgleichselements wird die bevorzugte Gewindehülse des Mitschleppers auf den Halteabschnitt aufgesteckt. Es versteht sich, dass ein Innendurchmesser der Gewindehülse derart ausgestaltet ist, dass eine reibschlüssige Verbindung zwischen der Gewindehülse und dem Halteabschnitt oder dem Doppelgewindebolzen ausreichend stark ist, um den Doppelgewindebolzen über die Drehung des Mitschleppers mitzudrehen. Um dies zu realisieren, werden unterschiedliche Metalle oder Kunststoffe eingesetzt, da diese einen ausreichend großen Reibwert zwischen dem bevorzugt verjüngten Halteabschnitt und der Gewindehülse realisieren. Die gleiche Funktion ist bevorzugt auch durch eine formschlüssige Verbindung zwischen dem Halteabschnitt und der radialen Innenseite des Mitschleppers erzielbar. Dazu werden bevorzugt Vierkant-, Sechskant- oder allgemein Mehrkantprofile sowie Torxprofile genutzt.

Daraus folgt, dass zwischen Mitschlepper und Halteabschnitt des Doppelgewindebolzens bevorzugt eine geometrische Verdrehsicherung oder eine über den Reibwert bestimmte Verdrehsicherung genutzt wird. Natürlich sind auch Kombinationen davon bevorzugt.

Gemäß einer weiteren bevorzugten Ausgestaltung des erfindungsgemäßen Toleranzausgleichselements weist die Gewindehülse eines der folgenden Merkmale oder eine Kombination dieser Merkmale auf: einen Gewindesteigungsversatz im Vergleich zum ersten Gewindeabschnitt, einen nur teilweise ausgeformten Gewindebereich und eine reibwerterhöhte äußere Oberfläche der Gewindehülse.

Die unterschiedlichen bevorzugten Merkmale, welche oben genannt worden sind, erzeugen ein bevorzugtes Widerstandsmoment zwischen dem Innengewinde des weiblichen Gewindeelements, welches auf das Außengewinde des Mitschleppers aufgeschraubt werden soll. Denn vorzugsweise ist das Innengewinde des weiblichen Gewindeelements an das Außengewinde des ersten Gewindeabschnitts angepasst. Entsprechend erschwert ein Gewindesteigungsversatz des Mitschleppers im Vergleich zum ersten Gewindeabschnitt ein Aufschrauben des weiblichen Gewindeelements, da dieser Gewindesteigungsversatz gleichzeitig auch einen Gewindesteigungsversatz im Vergleich zum Innengewinde des weiblichen Gewindeelements bedeutet.

Auch ein bevorzugtes nur teilweise ausgeformtes Gewinde bzw. ein nur teilweise ausgeformter Gewindegang auf dem Mitschlepper bewirkt ein Widerstandsmoment beim Aufschrauben des weiblichen Gewindeelements auf den Mitschlepper. Dieses Widerstandsmoment ist ausreichend groß, um die Drehung des weiblichen Gewindeelements über den Mitschlepper auf den Doppelgewindebolzen zu übertragen. Da die Gangrichtung des weiblichen Gewindeelements der Gangrichtung des zweiten axialen Gewindeabschnitts entgegengesetzt ist, führt die durch den Mitschlepper auf den Doppelgewindebolzen übertragene Drehung zu einem Herausschrauben des zweiten Gewindeabschnitts aus einer daran angepassten Gewindeöffnung aus dem ersten Bauteil.

Ist der Mitschlepper mit einer reibwerterhöhten äußeren Oberfläche ausgestattet, erzeugt dies ebenfalls ein Widerstandsmoment beim Aufdrehen des weiblichen Gewindeelements auf den Mitschlepper. Dieses Widerstandsmoment führt gleichermaßen zu einem Mitdrehen des Doppelgewindebolzens über den Mitschlepper.

Gemäß einer weiteren bevorzugten Ausgestaltung des erfindungsgemäßen Toleranzausgleichselements besteht der Mitschlepper aus einer Kunststoffhülse, die auf den verjüngten Halteabschnitt aufgesteckt oder an diesem verklebt oder an diesen angeformt ist.

Die bevorzugte Kunststoffhülse als Mitschlepper hat den Vorteil, dass sie mit geringem Aufwand herstellbar und auf den verjüngten Halteabschnitt des ersten Gewindeabschnitts aufgesteckt werden kann. Es ist gleichermaßen bevorzugt, die Kunststoffhülse direkt an den verjüngten Halteabschnitt anzuspritzen. Eine derartige Kunststoffhülse stellt bevorzugt einen ausreichend hohen Reibwert an ihrer radialen Innenseite wie an ihrer radialen Außenseite zur Verfügung. Die Reibung an der radialen Innenseite sorgt dafür, dass die Kunststoffhülse und somit der Mitschlepper einen ausreichend festen Halt auf dem verjüngten Halteabschnitt hat. Der ausreichend hohe Reibwert an der radialen Außenseite stellt bevorzugt sicher, dass beim Aufschrauben des weiblichen Gewindeelements auf den Mitschlepper der Doppelgewindebolzen mit dem weiblichen Gewindeelement mitgedreht wird. Somit wird auch bei der Nutzung einer Kunststoffhülse als Mitschlepper der selbsttätige Toleranzausgleich durch das Mitdrehen des Doppelgewindebolzens mit dem weiblichen Gewindeelement sichergestellt.

Gemäß einer weiteren bevorzugten Ausgestaltung vorliegender Erfindung weist die Kunststoffhülse des Mitschleppers eine zylindrische oder eine konische äußere Form auf.

Mit anderen Worten ist vorzugsweise die Kunststoffhülse des Mitschleppers in ihrer äußeren Form konisch ausgebildet oder zylindrisch ausgebildet. Während bei der bevorzugten zylindrischen Formgestaltung der Kunststoffhülse hauptsächlich die Materialwahl, nämlich der Kunststoff, für den gewünschten Reibwert sorgt, führt bei einer konisch ausgebildeten Kunststoffhülse eine Zu- oder Abnahme des Durchmessers der Kunststoffhülse zu einem sich verändernden Widerstandsmoment zwischen dem weiblichen Gewindeelement und dem Mitschlepper. Vorzugsweise ist die konisch ausgebildete Kunststoffhülse derart auf dem verjüngten Halteabschnitt angeordnet, dass der Durchmesser der Kunststoffhülse in Richtung Stützbund zunimmt. Dies hat den bevorzugten Vorteil, dass ein geringerer Durchmesser der Kunststoffhülse ein Aufschrauben des weiblichen Gewindeelements unterstützt. Der zunehmende Durchmesser der Kunststoffhülse in Richtung Stützbund erhöht wiederum das Widerstandsmoment zwischen weiblichem Gewindeelement und Mitschlepper, was das Mitdrehen des Doppelgewindebolzens mit der Rotation des weiblichen Gewindeelements unterstützt.

Gemäß einer weiteren bevorzugten Ausgestaltung des Toleranzausgleichselements ist mindestens ein Antriebsmerkmal zum Drehen des Gewindebolzens benachbart zu einem ersten und/oder einem zweiten axialen Ende des Gewindebolzens angeordnet, insbesondere ein Torx-, ein Mehrkant- oder ein Mehrzahn-Antriebsmerkmal.

Vorliegende Erfindung offenbart zudem eine Schraubverbindung zwischen einem ersten und einem zweiten Bauteil, in der das erste Bauteil und das zweite Bauteil mit einem Abstand zueinander über das Toleranzausgleichselement gemäß einer der zuvor beschriebenen Ausgestaltungen aneinander befestigt sind, wozu der zweite axiale Gewindeabschnitt in eine Gewindeöffnung des zweiten Bauteils eingeschraubt ist, sich das erste Bauteil an dem Stützbund des Toleranzausgleichselements abgewandt vom zweiten Gewindeabschnitt abstützt, der erste axiale Gewindeabschnitt eine Befestigungsöffnung im ersten Bauteil durchläuft und das erste Bauteil zwischen dem Stützbund und einem auf den ersten axialen Gewindeabschnitt aufgeschraubten weiblichen Gewindeelement gehalten ist.

Gemäß einer weiteren bevorzugten Ausgestaltung der erfindungsgemäßen Schraubverbindung wird die Gewindeöffnung im zweiten Bauteil gebildet durch: a) eine in einer Bauteilöffnung angeordnete Bajonettbefestigung mit einer Gewindebohrung, b) eine in einer Bauteilöffnung angeordnete Blindnietmutter, c) eine Einpressmutter oder eine Schweißmutter oder d) eine Gewindebohrung direkt im zweiten Bauteil.

Gemäß unterschiedlichen bevorzugten Ausgestaltungen des zweiten Bauteils wird die Gewindeöffnung zum Einschrauben des zweiten axialen Gewindeabschnitts auf unterschiedliche bevorzugte Weise bereitgestellt. Diese Konstruktionen, die sich alternativ zum Befestigen des zweiten Gewindeabschnitts verwenden lassen, sind allgemein im Stand der Technik bekannt. Vorzugsweise wird eine Bajonettbefestigung in einer gewindelosen Bauteilöffnung gehalten. Diese Bajonettbefestigung wiederum enthält eine Gewindeöffnung, die ein zum zweiten axialen Gewindeabschnitt passendes Innengewinde aufweist. In gleicher Weise ist es möglich, in einer Bauteilöffnung eine Blindnietmutter mit Innengewinde zu befestigen oder direkt in das zweite Bauteil einer Einpressmutter einzupressen oder eine Schweißmutter an dem zweiten Bauteil anzuschweißen. Abschließend ist es ebenfalls bevorzugt, eine im zweiten Bauteil vorhandene Bohrung mit einem Innengewinde auszustatten, welches an das Gewinde des zweiten axialen Gewindeabschnitts angepasst ist.

Vorliegende Erfindung offenbart zudem ein Herstellungsverfahren für das Toleranzausgleichselement gemäß einer der oben beschriebenen bevorzugten Ausgestaltungen. Das Herstellungsverfahren weist die folgenden Schritte auf: Bereitstellen eines Doppelgewindebolzens mit einem ersten und einem zweiten axialen Gewindeabschnitt entgegengesetzter Gangrichtung, die durch einen zwischen ihnen angeordneten Stützbund voneinander getrennt sind, wobei angrenzend an den ersten Gewindeabschnitt in bundabgewandter Richtung ein bevorzugt verjüngter Halteabschnitt und benachbart zu mindestens einem ersten oder zweiten axialen Ende des Doppelgewindebolzens ein Antriebsmerkmal zum Drehen des Doppelgewindebolzens vorgesehen ist, Anordnen eines Mitschleppers auf dem Halteabschnitt bestehend aus einer Kunststoffhülse oder einer Metallhülse, die reibschlüssig oder formschlüssig oder stoffschlüssig auf dem verjüngten Halteabschnitt gehalten ist.

Gemäß einer weiteren bevorzugten Ausgestaltung des ordnungsgemäßen Herstellungsverfahrens ist der weitere Schritt vorgesehen: Anformen oder Aufstecken der Kunststoffhülse des Mitschleppers, die eine zylindrische oder eine konische Form aufweist.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine perspektivische Seitenansicht einer bevorzugten Ausführungsform des selbsttätigen Toleranzausgleichselements mit Doppelgewindebolzen und Bajonettverriegelung,
- Figur 2: die bevorzugte Ausführungsform des Toleranzausgleichselements gemäß Figur 1 in einer seitlichen teilweisen Schnittansicht,
- Figur 3: eine Explosionsdarstellung des Toleranzausgleichselements gemäß der bevorzugten Ausführungsform in Figur 1,
- Figur 4 a-d: eine vergrößerte Darstellung des Doppelgewindebolzens mit dem ersten Gewindeabschnitt sowie einem darauf angeordneten Mitschlepper aus Kunststoff, der eine hohlzylinderähnliche Form (a), eine äußere konische Form (b), eine zylindrische Form mit Außengewindebereich (c) oder eine doppelkonische Form mit einem Außengewindebereich aufweist,
- Figur 5: eine seitliche Schnittdarstellung des erfindungsgemäß bevorzugten Toleranzausgleichselements während der Installation zwischen zwei Bauteilen,
- Figur 6: eine seitliche Schnittdarstellung des erfindungsgemäß bevorzugten Toleranzausgleichselements installiert zwischen zwei Bauteilen,
- Figur 7: eine bevorzugte Ausführungsform eines Schlüssellochs im zweiten Bauteil zur Befestigung der Bajonettverriegelung,
- Figur 8 a, b: eine seitliche Schnittdarstellung einer ersten (a) und einer zweiten bevorzugten Ausführungsform (b) des Doppelgewindebolzen mit Stützbund, welcher unterschiedlich ausgeführt ist,

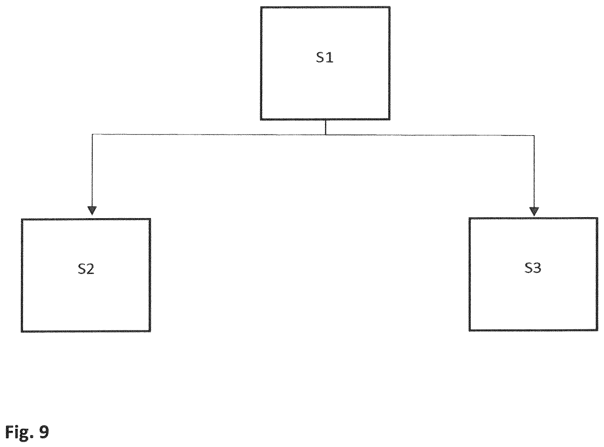

- Figur 9: ein Flussdiagramm einer bevorzugten Ausführungsform des Herstellungsverfahrens des erfindungsgemäß bevorzugten Toleranzausgleichselements.

### 5. Detaillierte Beschreibung der bevorzugten Ausführungsformen

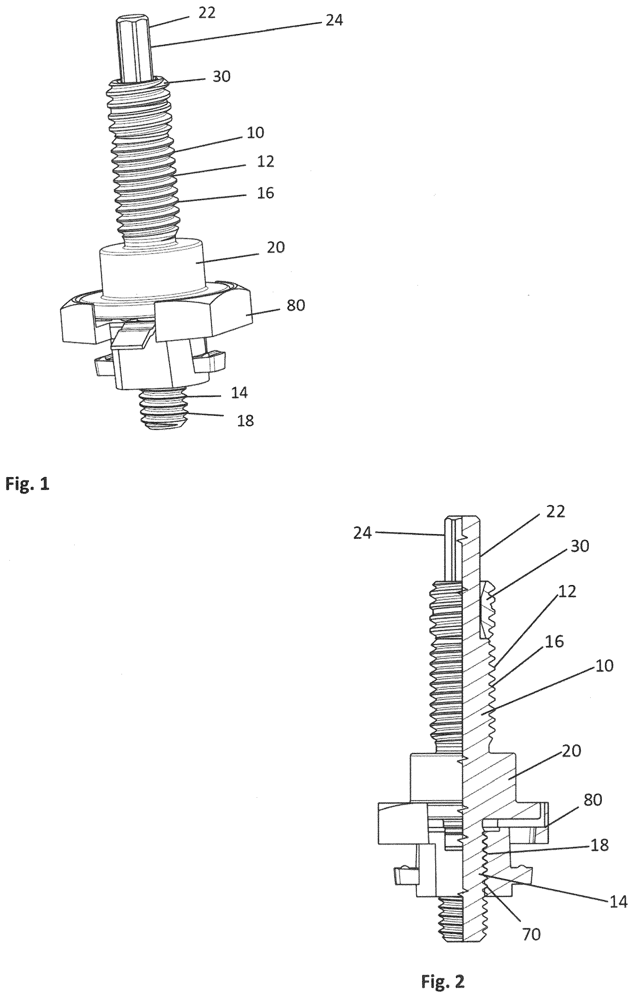

In den Figuren 1 und 2 ist jeweils eine perspektivische Ansicht einer bevorzugten Ausführungsform des erfindungsgemäßen selbsttätigen Toleranzausgleichselements 1 gezeigt. Während Figur 1 das Toleranzausgleichselement 1 in einer seitlichen perspektivischen Ansicht wiedergibt, ist in Figur 2 ein Teilschnitt in Längsrichtung des Toleranzausgleichselements 1 gezeigt.

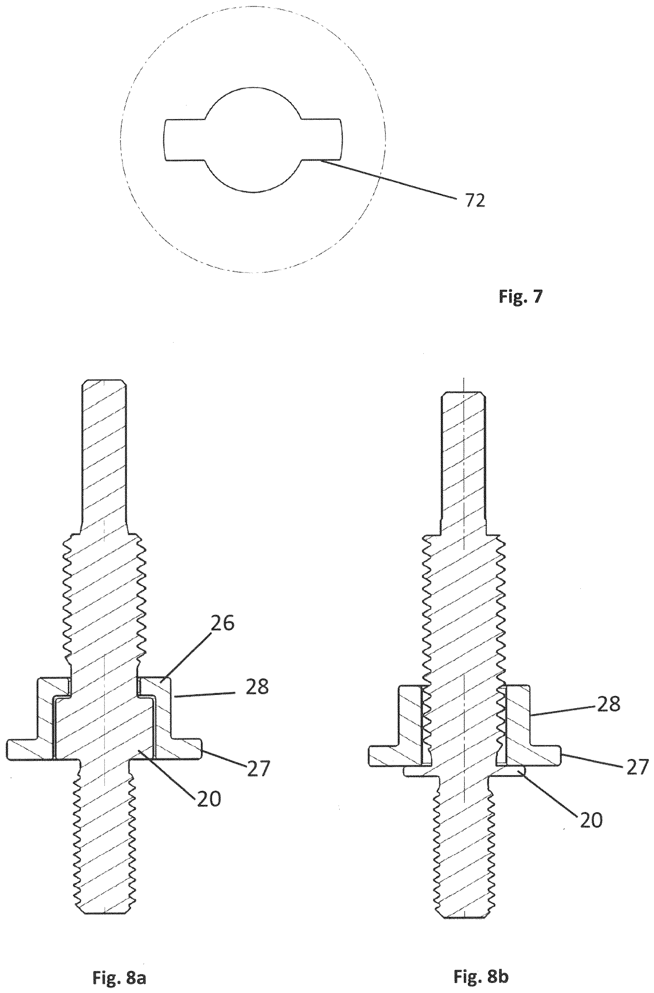

Das Toleranzausgleichselement 1 besteht aus einem Doppelgewindebolzen 10 mit einem ersten axialen Gewindeabschnitt 12 und einem zweiten axialen Gewindeabschnitt 14. Zwischen dem ersten 12 und dem zweiten axialen Gewindeabschnitt 12, 14 ist ein Stützbund 20 angeordnet. Der Stützbund 20 ist gemäß unterschiedlichen bevorzugten Ausgestaltungen unterschiedlich aufgebaut (siehe unten sowie Figur 8).

Der erste axiale Gewindeabschnitt 12 und der zweite axiale Gewindeabschnitt 14 weisen jeweils ein Gewinde 16, 18 auf. Die Gangrichtung der Gewinde 16, 18 ist entgegengesetzt, um einen selbsttätigen Toleranzausgleich eines Abstands zwischen zwei Bauteilen A, B während der Herstellung einer Schraubverbindung zwischen den Bauteilen A, B zu realisieren.

Angrenzend an den ersten Gewindeabschnitt 12 ist ein verjüngter Halteabschnitt 22 vorgesehen. Auf diesem verjüngten Halteabschnitt 22 ist ein Mitschlepper 30 angeordnet. Es ist ebenfalls bevorzugt, den Halteabschnitt 22 nicht verjüngt im Vergleich zum benachbarten Gewindeabschnitt 12 vorzusehen. In diesem Fall hat der Halteabschnitt 22 vorzugsweise einen Außendurchmesser, der einem Kerndurchmesser des Gewindeabschnitts 12 entspricht.

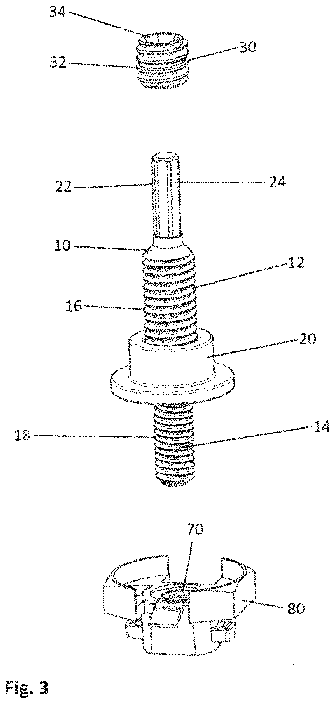

Der Mitschlepper 30 besteht gemäß unterschiedlichen bevorzugten Ausgestaltungen vorliegender Erfindung aus einer Metallhülse, wie es in Figur 3 gezeigt ist. Die Metallhülse des Mitschleppers 30 weist ein Außengewinde 32 auf. Das Außengewinde 32 ist gemäß einer bevorzugten Ausführungsform vorliegender Erfindung mit einem Steigungsversatz im Vergleich zum Gewinde 16 des ersten axialen Gewindeabschnitts 12 ausgebildet. Es ist ebenfalls bevorzugt, den radial außen verlaufenden Gewindegang des Außengewindes 32 des Mitschleppers 30 nur über einen Teil der axialen Länge des Mitschleppers 30 vorzusehen.

Gemäß einer weiteren bevorzugten Ausgestaltung vorliegender Erfindung ist die radial äußere Oberfläche des Mitschleppers 30 mit einer Oberflächenrauheit vorgesehen, die ein hohes Widerstands- oder Hemmmoment beim Aufschrauben eines weiblichen Gewindeelements 60 auf dem Mitschlepper 30 erzeugt. Das Hemm- oder Widerstandsmoment ist größer als ein Hemmmoment beim Einschrauben und/oder Ausschrauben des Gewindes 18 des zweiten axialen Gewindeabschnitts 14 in/aus einer Gewindeöffnung 70 des ersten Bauteils. Entsprechend wird beim Aufschrauben des weiblichen Gewindeelements 60 auf den Mitschlepper 30 der Doppelgewindebolzen 10 so lange mit dem Mitschlepper 30 mitgedreht, bis der Stützbund 20 durch Ausdrehen des zweiten axialen Gewindeabschnitts 14 aus der Gewindeöffnung 70 im ersten Bauteil A am zweiten Bauteil B anliegt. Dieses Ausdrehen basiert auf der zum ersten Gewinde 16 auf dem ersten Gewindeabschnitt 12 entgegengesetzten Gangrichtung des zweiten Gewindes 18 auf dem zweiten axialen Gewindeabschnitt 14.

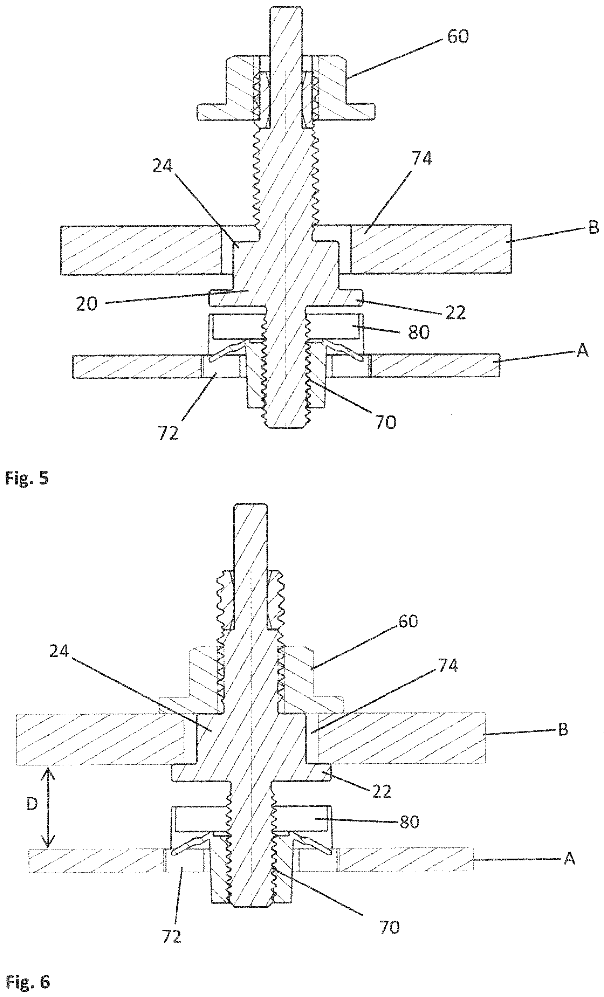

Sobald der Abstand D (siehe Fig. 6) zwischen den Bauteilen durch das Toleranzausgleichselement 1 überbrückt ist, wir das weibliche Gewindeelement 60 auf den Gewindeabschnitt 12 in Richtung Stützbund 20 aufgeschraubt. Das Aufschrauben des Gewindeelements 60 auf den Gewindeabschnitt 12 endet, sobald das Gewindeelement 60 in Kontakt mit dem Bauteil B steht. Vorzugsweise muss ein vorgegebenes Anzugsdrehmoment auf das Gewindeelement 60 aufgebracht werden, um eine verlässliche Befestigung, vorzugsweise eine Blockverschraubung, am Bauteil B zu erzielen.

Es ist ebenfalls bevorzugt, im Außengewinde 32 des Mitschleppers 30 Hemmstege oder hemmende Vorsprünge (nicht gezeigt) vorzusehen, um das Hemm- oder Widerstandsmoment zu erzeugen oder zu steigern.

Weiterhin bevorzugt wird der Mitschlepper 30 in Form der Metallhülse alternativ reibschlüssig und/oder formschlüssig auf dem verjüngten Halteabschnitt 22 gehalten (siehe Fig. 3). Für eine formschlüssige Verbindung weist der Halteabschnitt 22 eine unrunde Außenkontur 24 auf, vorzugsweise ein Mehrkant, die mit einer ebenfalls unrunden Innenkontur 34 des Mitschleppers 30 eine drehfeste formschlüssige Verbindung bildet. Beispielgebend zeigt Figur 3 eine Sechskant-Kontur 24 am Halteabschnitt 22, die in eine Sechskant-Öffnung 34 im Mitschlepper 30 eingreift.

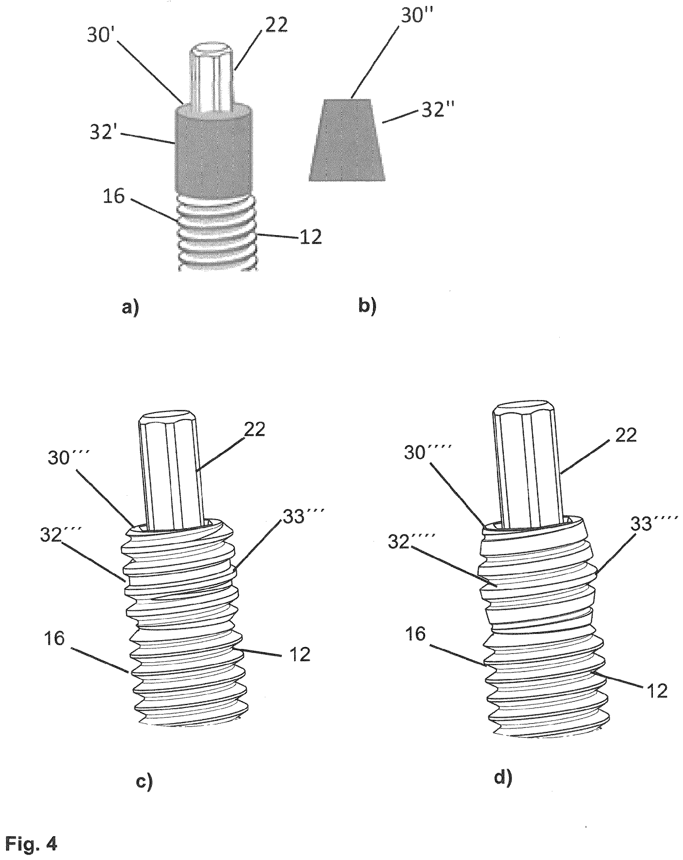

Gemäß einer weiteren bevorzugten Ausführungsform besteht der Mitschlepper 30' aus einer Kunststoffhülse mit einer hohlzylindrischen Form und entsprechenden Mantelfläche 32' (siehe Fig. 4 a). Der Mitschlepper 30' ist formschlüssig, reibschlüssig und/oder stoffschlüssig auf dem Halteabschnitt 22 gehalten. Zu diesem Zweck wird vorzugsweise die Kunststoffhülse 30' vorgefertigt und danach auf den Halteabschnitt 22 aufgesteckt. Es ist ebenfalls bevorzugt, die Kunststoffhülse 30' direkt am Halteabschnitt 22 anzuformen, vorzugsweise mit einem Spritzgussverfahren anzuspritzen.

Für einen besseren Halt zwischen dem Mitschlepper 30' und dem Halteabschnitt 22 wird der Mitschlepper 30' vorzugsweise mit dem Halteabschnitt 22 verklebt.

Eine weitere bevorzugte Ausführungsform des Mitschleppers 30" umfasst eine Kunststoffhülse mit einer konischen äußeren Form und der entsprechend geformten Mantelfläche 32" (siehe Figur 4 b). Somit weist der Mitschlepper 30" ein erstes axiales Ende mit einem ersten Außendurchmesser auf, der kleiner ist als ein Außendurchmesser an einem zweiten axialen Ende des Mitschleppers 30".

Vorzugsweise wird der Mitschlepper 30" derart auf dem verjüngten Halteabschnitt 22 angeordnet, dass der kleinere Außendurchmesser des Mitschleppers 30" vom axialen Gewindeabschnitt 12 abgewandt und der größere Außendurchmesser benachbart zum axialen Gewindeabschnitt 12 positioniert ist. Auf diese Weise unterstützt der kleinere Außendurchmesser ein Aufschrauben des weiblichen Gewindeelements 60 auf den Mitschlepper 30''. Der größere Außendurchmesser steigert während des Aufschraubens des weiblichen Gewindeelements 60 auf den Mitschlepper 30" das Widerstandsmoment zwischen dem Mitschlepper 30" und dem weiblichen Gewindeelement 60, sodass der Doppelgewindebolzen 10 mit dem Mitschlepper 30" mitgedreht wird.

Gemäß einer weiteren bevorzugten Ausgestaltung des Mitschleppers 30'', 30‴ aus Kunststoff ist an der jeweiligen Mantelfläche 32', 32" ein Außengewinde vorgesehen. Dieses Außengewinde unterstützt ein Verbinden mit dem weiblichen Gewindeelement 60. Zudem bietet das Außengewinde die bevorzugte Möglichkeit, Hemmmomente konstruktiv in die Gewindeverbindung zwischen Mitschlepper 30"; 30‴ und dem weiblichen Gewindeelements 60 zu integrieren. Diese konstruktiven Ausgestaltungen haben eine ähnliche Form wie die oben in Bezug auf den Mitschlepper 30 beschriebenen Konstruktionen. Entsprechend bevorzugte Ausführungsformen zeigen die Figuren 4 c) und d).

In Fig. 4 c) hat der bevorzugte Mitschlepper 30‴ aus elastischem Kunststoff eine hohlzylindrische Form. Die radial äußere Mantelfläche 32‴ weist einen Gewindebereich 33‴ auf, der ähnliche dem Gewindeabschnitt 12 ausgebildet ist. Sollte der Gewindebereich 33‴ nicht genau in den Gewindeabschnitt 12 übergehen, ist der Mitschlepper 30‴ vorzugsweise auf dem Halteabschnitt 22 radial versetzbar. Damit wird ein Aufschrauben des Gewindeelements 60 vom Mitschlepper 30‴ auf den Gewindeabschnitt 12 gewährleistet.

Der bevorzugte Mitschlepper 30‴ in Fig. 4 c) besteht ebenfalls bevorzugt aus elastischem Kunststoff. Vorzugsweise hat der Mitschlepper 30ʺʺ die äußere Form eines Doppelkonus mit zentraler Durchgangsöffnung. Die axialen Enden des Mitschleppers 30ʺʺ sind im Vergleich zu einem axialen Mittelbereich des Mitschleppers 30ʺʺ verjüngt oder mit einem kleineren Außendurchmesser ausgebildet. Die doppelkonische Form hat den Vorteil, dass bei einer Montage des Mitschleppers 30ʺʺ auf dem Halteabschnitt 22 keine Ausrichtung des Mitschleppers 30ʺʺ zu beachten ist.

Es ist ebenfalls bevorzugt, den doppelkonischen Mitschlepper 30ʺʺ als einfachen Konus mit Außengewindebereich vorzusehen. In diesem Fall würde sich der Mitschlepper 30ʺʺ nur von einem axialen Ende bis zu seiner Mitte erstrecken.

Um den Doppelgewindebolzen 10 mit dem zweiten axialen Gewindeabschnitt 14 in die Gewindeöffnung 70 des zweiten Bauteils B einschrauben zu können, ist vorzugsweise benachbart zu mindestens einem axialen Ende des Doppelgewindebolzen 10 ein Antriebsmerkmal vorgesehen.

Es ist ebenfalls bevorzugt, an beiden axialen Enden des Doppelgewindebolzens 10 ein Antriebsmerkmal anzuordnen.

Das Antriebsmerkmal ist gemäß unterschiedlichen bevorzugten Ausgestaltungen vorliegender Erfindung ein Torx-, ein Mehrkant- oder ein Mehrzahn Antriebsmerkmal. Derartige Konstruktionen sind im Stand der Technik allgemein bekannt.

Wie in den Figuren 1-4 zu erkennen ist, besteht das Antriebsmerkmal bevorzugt aus einer unrunden Mehrkant-Kontur 24. Das Antriebsmerkmal 24 lässt sich gleichzeitig auch dazu nutzen, um den Mitschlepper 30; 30'; 30", 30‴, 30ʺʺ drehfest formschlüssig auf dem Doppelgewindebolzen 10 zu halten.

Es ist ebenfalls bevorzugt, den Doppelgewindebolzen10 ohne Antriebsmerkmal bereitzustellen. In diesem Fall kann man das Toleranzausgleichselement 1 manuell oder mit einem Werkzeug (nicht gezeigt) reibschlüssig halten und um seine Längsachse drehen. Dies gewährleistet ebenfalls ein Eindrehen des Doppelgewindebolzens 10 in das erste Bauteil A sowie ein Überbrücken des Abstands D zwischen den Bauteilen A, B.

Um eine Schraubverbindung zwischen dem ersten Bauteil A und dem zweiten Bauteil B unter Überbrückung des dazwischenliegenden Abstands D mithilfe des Toleranzausgleichselements 1 herzustellen, wird zunächst der zweite Gewindeabschnitt 14 in die Gewindeöffnung 70 des ersten Bauteils A eingeschraubt. Dies erfolgt vorzugsweise mithilfe eines an dem Antriebsmerkmal 24 angreifenden Werkzeug (nicht gezeigt).

Die Gewindeöffnung 70 im ersten Bauteil A ist gemäß unterschiedlichen bevorzugten Ausgestaltungen in einer ersten Bauteilöffnung 72 als Blindnietmutter oder Einpressmutter oder Schweißmutter vorgesehen. Gemäß einer anderen bevorzugten Ausführungsform vorliegender Erfindung ist die erste Bauteilöffnung 72 ein Schlüsselloch (siehe Figur 7), um eine Bajonettbefestigung 80 mit einer Gewindeöffnung aufzunehmen und zu verrasten.

Das zweite Gewinde 18 des zweiten Gewindeabschnitts 14, vorzugsweise ein Linksgewinde, wird zunächst in die Gewindeöffnung 70 durch eine Drehung entgegen dem Uhrzeigersinn zumindest teilweise eingeschraubt.

Nachfolgend wird das zweite Bauteil B derart gegenüber dem ersten Bauteil A angeordnet, dass der erste Gewindeabschnitt 12 eine zweite Bauteilöffnung 76 durchläuft. Die zweite Bauteilöffnung 76 hat einen Innendurchmesser, der geringer ist als ein Außendurchmesser des Stützbunds 20. Zudem ist es bevorzugt, dass der Stützbund 20 stufenförmig ausgebildet ist. Ein umlaufender Kragen 27 größeren Durchmessers bildet die Stützstufe für das zweite Bauteil B. Ein radial einwärts versetzter Bundabschnitt 28 gewährleistet einen lateralen Toleranzausgleich zwischen dem Doppelgewindebolzen 10 und dem zweiten Bauteil B, da der Bundabschnitt 28 aufgrund seines kleineren Außendurchmessers verglichen zur zweiten Bauteilöffnung 74 darin radial versetzt werden kann. Zudem ermöglicht bevorzugt der Stützbund 20, 27, 28 eine metallische Blockverschraubung der Bauteilverbindung, selbst wenn das zweite Bauteil B aus Kunststoff besteht. Auf diese Weise wird ein Setzen des zweiten Bauteils B und ein Lösen der Bauteilverbindung verhindert.

Fig. 8 a, b zeigt zwei bevorzugte konstruktive Alternativen, um den Stützbund 20 mit Bundabschnitt 24 bereitzustellen. Gemäß einer Ausgestaltung ist der Bundabschnitt 24 hülsenförmig ausgestaltet (siehe Fig. 8 a). An seinen axialen Enden ist ein radial einwärts ragender umlaufender Kragen 26 zur Abstützung am Stützbund 20 des Doppelgewindebolzens 10 vorgesehen. Am zweiten axialen Ende ragt ein umlaufender Kragen 22 radial auswärts, um sich am zweiten Bauteil B abzustützen.

Gemäß einer weiteren bevorzugten Ausgestaltung ist der Stützbund 20 ein radial auswärts ragender umlaufender Kragen, auf dem sich der im Querschnitt doppel-L-förmig ausgebildete Bundabschnitt 28 abstützt. Der Stützbund 20 ist vorzugsweise radial auswärts verlängert durch den umlaufenden Kragen 27 (siehe Fig. 8 b).

Bezugnehmend auf die Figuren 8 a, b ist es ebenfalls bevorzugt, die gezeigte zumindest zweiteilige Konstruktion des Doppelgewindebolzens 10 mit Stützbund 20, 27, 28 als ein integrales Bauteil, also einteilig, vorzusehen.

Während das weibliche Gewindeelement 60 durch Drehung im Uhrzeigersinn oder gegen den Uhrzeigersinn auf den Mitschlepper 30; 30'; 30" aufgeschraubt wird, wird der Doppelgewindebolzen 10 bevorzugt durch den Reibschluss oder Stoffschluss zwischen Mitschlepper 30; 30'; 30" und Doppelgewindebolzen 10 mitgedreht. Durch das Mitdrehen des Doppelgewindebolzens 10 im Uhrzeigersinn oder gegen den Uhrzeigersinn wird der zweite Gewindeabschnitt 14 aus der Gewindeöffnung 70 herausgeschraubt, bis der Stützbund 20 am zweiten Bauteil B anliegt (siehe Figur 5). Durch Anliegen des Stützbunds 20 am zweiten Bauteil B überwindet das weitere Drehen das Hemmmoment zwischen dem weiblichen Gewindeelement 60 und dem Mitschlepper 30; 30'; 30'' und das weibliche Gewindeelement 60 auf den ersten Gewindeabschnitt 12 aufgeschraubt (siehe Figur 6).

Zur Herstellung des selbsttätigen Toleranzausgleichselements 1 wird zunächst der Doppelgewindebolzen 10 bereitgestellt (Schritt S1). In Abhängigkeit vom Anwendungsfall des selbsttätigen Toleranzausgleichselements 1 ist es bevorzugt, den Doppelgewindebolzen 10 aus Kunststoff oder Metall herzustellen.

Auf dem verjüngten Halteabschnitt 22 des Doppelgewindebolzens 10 benachbart zum ersten Gewindeabschnitt 12 wird dann der Mitschlepper 30; 30'; 30" angeordnet. Besteht der Mitschlepper 30 gemäß einer bevorzugten Ausführungsform vorliegender Erfindung aus Metall, wird er auf den verjüngten Halteabschnitt 22 aufgesteckt. Dieses Vorgehen ist ebenfalls bevorzugt, wenn der Mitschlepper 30'; 30" als Kunststoffhülse vorgesehen ist (siehe oben). Da der Mitschlepper 30 aus Metall oder alternativ aus Kunststoff eine zentrale Durchgangsöffnung umfasst, wird der Mitschlepper 30; 30'; 30'' nach dem Aufstecken auf den verjüngten Halteabschnitt 22 dort reibschlüssig gehalten.

Gemäß einer anderen bevorzugten Herstellungsalternative wird der Mitschlepper 30'; 30" an den verjüngten Halteabschnitt 22 angeformt (Schritt S3). Dazu nutzt man gemäß einer Herstellungsalternative vorzugsweise ein Spritzgussverfahren.

Sollte der Doppelgewindebolzen 10 ebenfalls aus Kunststoff hergestellt sein, werden der Doppelgewindebolzen 10 und der Mitschlepper 30'; 30" vorzugsweise mit einem 2K Spritzgussverfahren hergestellt.

Abschließend wird eine Bajonettverriegelung mit Gewindebohrung oder eine Blindnietmutter bereitgestellt, um den Doppelgewindebolzen 10 im ersten Bauteil A zu befestigen. Für die Befestigung im zweiten Bauteil B wird eine Mutter 60 passend zum ersten Gewindeabschnitt 12 bereitgestellt.

### Bezugszeichenliste

- 1: selbsttätiges Toleranzausgleichselement
- 10: Doppelgewindebolzen
- 12: erster Gewindeabschnitt einer ersten Gangrichtung
- 14: zweiter Gewindeabschnitt mit einer der ersten entgegengesetzten zweiten Gangrichtung
- 16, 18: Gewinde entgegengesetzter Gangrichtung
- 20: Stützbund
- 22: Halteabschnitt
- 24: unrunde Außenkontur
- 26: Kragen
- 27: Kragen
- 30; 30'; 30"; 30‴; 30ʺʺ: Mitschlepper
- 32: Außengewinde des Mitschleppers
- 34: Innenkontur des Mitschleppers
- 60: weibliches Gewindeelement
- 70: Gewindeöffnung im ersten Bauteil
- 72: erste Bauteilöffnung
- 76: zweite Bauteilöffnung
- 80: Bajonettbefestigung
- A, B: Bauteile
- D: Abstand zwischen den Bauteilen A, B

## Patentansprüche

1. Ein selbsttätiges Toleranzausgleichselement (1), mit dem Toleranzen im Abstand zwischen einem ersten (A) und einem zweiten Bauteil (B) ausgleichbar sind, wobei das Toleranzausgleichselement (1) aufweist:
a. einen Doppelgewindebolzen (10) mit einem ersten (12) und einem zweiten axialen Gewindeabschnitt (14) entgegengesetzter Gangrichtung, die durch einen zwischen ihnen angeordneten Stützbund (20) voneinander getrennt sind,
b. angrenzend an den ersten Gewindeabschnitt (12) ist in bundabgewandter Richtung ein vorzugsweise verjüngter Halteabschnitt (22) mit einem darauf angeordneten Mitschlepper (30; 30'; 30"; 30‴; 30ʺʺ) vorgesehen, der angepasst ist, um durch ein Innengewinde eines weiblichen Gewindeelements (60) passend zum ersten Gewindeabschnitt (12) reibschlüssig und/oder formschlüssig das Toleranzausgleichselement (1) über den Mitschlepper (30; 30'; 30"; 30"'; 30ʺʺ) mitzudrehen, sodass ein Abstand (D) zwischen dem ersten (A) und dem zweiten Bauteil (B) selbsttätig durch das Toleranzausgleichselement (1) überbrückbar ist.

2. Das Toleranzausgleichselement (1) gemäß Patentanspruch 1, in dem der Mitschlepper (30) eine Gewindehülse mit einem Außengewinde ist, die aus Metall oder Kunststoff besteht.

3. Das Toleranzausgleichselement (1) gemäß Patentanspruch 2, in dem die Gewindehülse eines der folgenden Merkmale oder eine Kombination davon aufweist: einen Gewindesteigungsversatz im Vergleich zum ersten Gewindeabschnitt, einen nur teilweise ausgeformten Gewindebereich und eine reibwerterhöhte äußere Oberfläche.

4. Das Toleranzausgleichselement (1) gemäß Patentanspruch 1, in dem der Mitschlepper (30'; 30") eine Kunststoffhülse ist, die auf den Halteabschnitt (22) aufgesteckt oder an diesen angeformt ist.

5. Das Toleranzausgleichselement (1) gemäß Patentanspruch 4, in dem die Kunststoffhülse des Mittschleppers (30'; 30") eine zylindrische, oder eine doppelkonische oder eine konische Form aufweist.

6. Das Toleranzausgleichselement (1) gemäß einem der vorhergehenden Patentansprüche, in dem mindestens ein Antriebsmerkmal (24) zum Drehen des Gewindebolzens (10) benachbart zu einem ersten und/oder einem zweiten axialen Ende des Gewindebolzens (10) angeordnet ist, insbesondere ein Torx-, ein Mehrkant- oder ein Mehrzahnantriebsmerkmal.

7. Eine Schraubverbindung zwischen einem ersten (A) und einem zweiten Bauteil (B), in der
das erste Bauteil (A) und das zweite Bauteil (B) mit einem Abstand (D) zueinander über das Toleranzausgleichselement (1) eines der vorhergehenden Patentansprüche aneinander befestigt sind, wozu
der zweite axiale Gewindeabschnitt (14) in eine Gewindeöffnung (70) des zweiten Bauteils (B) eingeschraubt ist,
sich das erste Bauteil (A) an dem Stützbund (20) des Toleranzausgleichselements (1) abgewandt vom zweiten Gewindeabschnitt (14) abstützt,
der erste axiale Gewindeabschnitt (12) eine Befestigungsöffnung im ersten Bauteil (A) durchläuft und
das erste Bauteil (A) zwischen dem Stützbund (20) und einem auf den ersten axialen Gewindeabschnitt (12) aufgeschraubten weiblichen Gewindeelement (60) gehalten ist.

8. Die Schraubverbindung gemäß Patentanspruch 7, in der die Gewindeöffnung (70) im zweiten Bauteil (B) gebildet wird durch: a) eine in einer Bauteilöffnung angeordnete Bajonettbefestigung (80) mit einer Gewindebohrung (70), b) eine in einer Bauteilöffnung angeordnete Blindnietmutter, c) eine Einpressmutter oder eine Schweißmutter oder d) eine Gewindebohrung direkt im zweiten Bauteil (B).

9. Ein Herstellungsverfahren für ein Toleranzausgleichselement (1) gemäß einem der Patentansprüche 1 bis 6, das die folgenden Schritte aufweist:
a. Bereitstellen (S1) eines Doppelgewindebolzens (10) mit einem ersten (12) und einem zweiten axialen Gewindeabschnitt (14) entgegengesetzter Gangrichtung, die durch einen zwischen ihnen angeordneten Stützbund (20) voneinander getrennt sind, wobei angrenzend an den ersten Gewindeabschnitt (12) in bundabgewandter Richtung ein vorzugsweise verjüngter Halteabschnitt (22) vorgesehen ist,
b. Anordnen (S2; S3) eines Mitschleppers (30; 30'; 30") auf dem Halteabschnitt (22) bestehend aus einer Kunststoffhülse oder einer Metallhülse, die reibschlüssig oder formschlüssig oder stoffschlüssig auf dem Halteabschnitt (22) gehalten ist.

10. Das Herstellungsverfahren gemäß Patentanspruch 9 mit dem weiteren Schritt:
Anformen (S2) oder Aufstecken (S3) der Kunststoffhülse des Mitschleppers (30'; 30"), die eine zylindrische oder eine konische Form aufweist.

## Claims

1. An automatic tolerance compensation element (1) with which tolerances in the distance between a first (A) and a second component (B) are compensable, with the tolerance compensation element (1) comprising:
a. a double threaded bolt (10) with a first (12) and a second axial thread section (14) with opposite convolution direction, which are separated from one another by means of a supporting shoulder (20) arranged between them,
b. adjacent to the first thread section (12), a preferably tapered retaining section (22) with a dragging element (30; 30'; 30''; 30‴; 30ʺʺ) arranged on it is provided in a direction facing away from the shoulder, the retaining section (22) being adapted to co-rotate the tolerance compensation element (1) via the dragging element (30; 30'; 30"; 30‴; 30ʺʺ) in a friction-fit and/or form-fit manner by means of an inner thread of a female thread element (60) matching the first thread section (12), so that a distance (D) between the first (A) and the second component (B) is automatically bridgeable by means of the tolerance compensation element (1).

2. The tolerance compensation element (1) according to claim 1, wherein the dragging element (30) is a threaded sleeve with an outer thread consisting of metal or plastic material.

3. The tolerance compensation element (1) according to claim 2, wherein the threaded sleeve comprises one of the following features or a combination of these features: an offset of the thread pitch in comparison with the first thread section, an only partly formed thread section and an outer surface of the threaded sleeve having an increased friction value.

4. The tolerance compensation element (1) according to claim 1, wherein the dragging element (30'; 30") is a plastic sleeve which is plugged on the retaining section (22) or is molded to it.

5. The tolerance compensation element (1) according to claim 4, wherein the plastic sleeve of the dragging element (30'; 30") has a cylindrical or a double-conical or a conical shape.

6. The tolerance compensation element (1) according to one of the preceding claims, wherein at least one drive feature (24) for rotating the threaded bolt (10) is arranged adjacent to a first and/or a second axial end of the threaded bolt (10), in particular a torx drive feature, a polygonal drive feature or a multi-tooth drive feature.

7. A screw connection between a first (A) and a second component (B) in which
the first component (A) and the second component (B) are fastened with each other at a distance (D) to one another by means of the tolerance compensation element (1) according to one of the preceding claims, for the purpose of what
the second axial thread section (14) is screwed into a thread opening (70) of the second component (B),
the first component (A) is supported by the supporting shoulder (20) of the tolerance compensation element (1) facing away from the second thread section (14),
the first axial thread section (12) passes a fastening opening in the first component (A) and
the first component (A) is held between the supporting shoulder (20) and a female thread element (60) that is screwed onto the first axial thread section (12).

8. The screw connection according to claim 7, where the thread opening (70) in the second component (B) is formed by: a) a bayonet fastening (80) with a thread bore (70) arranged in a component opening, b) a blind rivet nut arranged in a component opening, c) an insert nut or a welding nut or d) a thread bore in the second component (B), directly.

9. A manufacturing method for a tolerance compensation element (1) according to one of the claims 1 to 6, including the following steps:
a. providing (S1) a double threaded bolt (10) with a first (12) and a second axial thread section (14) of an opposite convolution direction which are separated from one another by means of a supporting shoulder (20) arranged between them, wherein adjacent to the first thread section (12) in a direction facing away from the shoulder, a preferably tapered retaining section (22) is provided,
b. arranging (S2; S3) a dragging element (30; 30'; 30") on the retaining section (22) consisting of a plastic sleeve or a metal sleeve which are held friction-fit or form-fit or firmly bonded on the retaining section (22).

10. The manufacturing method according to claim 9 with the further step:
molding (S2) or plugging on (S3) the plastic sleeve of the dragging element (30'; 30") which has a cylindrical or a conical shape.

## Revendications

1. Élément de compensation de tolérance autonome (1), permettant de compenser des tolérances dans la distance entre un premier (A) et un deuxième composant (B), dans lequel l'élément de compensation de tolérance (1) présente :
a. un boulon à double filetage (10) doté d'une première (12) et d'une deuxième section filetée axiale (14) de sens opposé, lesquelles sont séparées l'une de l'autre par un collet d'appui (20) disposé entre celles-ci,
b. il est prévu une section de maintien (22) de préférence effilée, dans le sens opposé au collet, adjacente à la première section filetée (12), avec un entraîneur (30 ; 30' ; 30" ; 30‴ ; 30ʺʺ) disposé sur celle-ci, laquelle est adaptée pour amener l'élément de compensation de tolérance (1) en rotation par le biais de l'entraîneur (30 ; 30' ; 30" ; 30‴ ; 30ʺʺ), par friction et/ou par complémentarité de forme, par un filetage intérieur d'un élément à filetage femelle (60) correspondant à la première section filetée (12), de sorte qu'une distance (D) entre le premier (A) et le deuxième composant (B) peut être franchie de façon autonome par l'élément de compensation de tolérance (1).

2. Élément de compensation de tolérance (1) selon la revendication 1, dans lequel l'entraîneur (30) est une douille filetée dotée d'un filetage extérieur, laquelle est constituée de métal ou de plastique.

3. Élément de compensation de tolérance (1) selon la revendication 2, dans lequel la douille filetée présente l'une des caractéristiques suivantes ou une combinaison de celles-ci : un décalage de pas de filetage en comparaison avec la première section filetée, une région de filetage formée seulement partiellement et une surface extérieure à coefficient de friction augmenté.

4. Élément de compensation de tolérance (1) selon la revendication 1, dans lequel l'entraîneur (30' ; 30") est une douille en plastique, laquelle est montée sur la section de maintien (22) ou moulée sur celle-ci.

5. Élément de compensation de tolérance (1) selon la revendication 4, dans lequel la douille en plastique de l'entraîneur (30' ; 30") présente une forme cylindrique, ou une forme doublement conique ou conique.

6. Élément de compensation de tolérance (1) selon l'une des revendications précédentes, dans lequel au moins une caractéristique d'entraînement (24) pour la rotation du boulon fileté (10), en particulier une caractéristique Torx, polygonale ou d'entraînement à plusieurs dents, est disposée de façon adjacente à une première et/ou à une deuxième extrémité axiale du boulon fileté (10).

7. Liaison par vis entre un premier (A) et un deuxième composant (B), dans laquelle
le premier composant (A) et le deuxième composant (B) sont fixés l'un à l'autre à une distance (D) l'un de l'autre par le biais de l'élément de compensation de tolérance (1) selon l'une des revendications précédentes, ce pour quoi
la deuxième section filetée axiale (14) est vissée dans une ouverture filetée (70) du deuxième composant (B),
le premier composant (A) s'appuie sur le collet d'appui (20) de l'élément de compensation de tolérance (1) à l'opposé de la deuxième section filetée (14),
la première section filetée axiale (12) traverse une ouverture de fixation dans le premier composant (A) et
le premier composant (A) est maintenu entre le collet d'appui (20) et un élément à filetage femelle (60) vissé sur la première section filetée axiale (12).

8. Liaison par vis selon la revendication 7, dans laquelle l'ouverture filetée (70) est formée dans le deuxième composant (B) par : a) une fixation à baïonnette (80) avec un alésage fileté (70), disposée dans une ouverture de composant, b) un écrou à rivet borgne disposé dans une ouverture de composant, c) un écrou à encastrer ou un écrou à souder ou d) un alésage fileté directement dans le deuxième composant (B).

9. Procédé de production pour un élément de compensation de tolérance (1) selon l'une des revendications 1 à 6, lequel présente les étapes suivantes :
a. mise à disposition (S1) d'un boulon à double filetage (10) doté d'une première (12) et d'une deuxième section filetée axiale (14) de sens opposé, lesquelles sont séparées l'une de l'autre par un collet d'appui (20) disposé entre celles-ci, dans lequel il est prévu une section de maintien (22) de préférence effilée, dans le sens opposé au collet, adjacente à la première section filetée (12),
b. agencement (S2 ; S3) d'un entraîneur (30 ; 30' ; 30") sur la section de maintien (22), lequel est constitué d'une douille en plastique ou d'une douille en métal, laquelle est maintenue par friction ou par complémentarité de forme ou par liaison de matière sur la section de maintien (22).

10. Procédé de production selon la revendication 9, comprenant l'étape supplémentaire suivante :
moulage (S2) ou montage (S3) de la douille en plastique de l'entraîneur (30' ; 30"), laquelle présente une forme cylindrique ou conique.
